Europäisches Patentamt

European Patent Office

Office européen des brevets

(19)

(11) Veröffentlichungsnummer: **0 244 779 B1**

(12) **EUROPÄISCHE PATENTSCHRIFT**

(45) Veröffentlichungstag der Patentschrift: 26.06.91

(51) Int. Cl.⁵: **H04B 7/005**

(21) Anmeldenummer: 87106326.9

(22) Anmeldetag: 30.04.87

(54) Adaptiver Depolarisations-Interferenz-Kompensator.

(30) Priorität: 06.05.86 DE 3615314

(43) Veröffentlichungstag der Anmeldung:
11.11.87 Patentblatt 87/46

(45) Bekanntmachung des Hinweises auf die
Patenterteilung:
26.06.91 Patentblatt 91/26

(84) Benannte Vertragsstaaten:
**AT CH DE ES GB IT LI NL**

(56) Entgegenhaltungen:

**IEEE INTERNATIONAL CONFERENCE ON
COMMUNICATIONS, PROCEEDINGS, Band 3,
Mai 1984, Seiten 1442-1446, IEEE/Elsevier
Science Publishers B.V., Amsterdam, NL; T.
RYU et al.: "IF Band cross polarization canceler"**

**IEEE INTERNATIONAL CONFERENCE ON
COMMUNICATIONS, PROCEEDINGS, Band 3,
Juni 1981, Seiten 46.3.1-46.3.5, IEEE, New
York, US; J. NAMIKI et al.: "Adaptive receiver
for cross-polarized digital transmission"**

(73) Patentinhaber: **Siemens Aktiengesellschaft
Wittelsbacherplatz 2
W-8000 München 2(DE)**

(72) Erfinder: **Lankl, Berthold, Dipl.-Ing.
Boschetsrieder Strasse 7
W-8000 München 70(DE)**

## Beschreibung

Die Erfindung bezieht sich auf einen adaptiven Depolarisations-Interferenz-Kompensator für digitale Richtfunksysteme mit vielstufiger Quadraturamplitudenmodulation (QAM) bei hinsichtlich Takt- und/oder Trägerfrequenz nicht notwendigerweise synchronem Gleichkanalbetrieb der orthogonal polarisierten Signale unter Verwendung von Transversalfiltern mit Einrichtungen zur Auskopplung von Signalen aus dem Empfangszweig der einen Polarisation und Einkopplung in den Empfangsweg der jeweils anderen Polarisation, mit im Empfangszweig der beiden Empfänger mit demselben oder mit aufeinander synchronisierten getrennten Lokaloszillatoren für die unterschiedlich polarisierten Signale angeordnetem Quadraturdemodulator für seine beiden Signalanteile (I- und Q-Kanal) und ferner einem Canceller, der aus zwei komplexen Transversalfiltern für die beiden Polarisationsrichtungen besteht, denen eingangsseitig jeweils ein ZF-Empfangssignal einer Polarisation zugeführt wird, und die ausgangsseitig in den Empfangszweig der jeweils anderen Polarisation eingekoppelt werden.

Zur Erhöhung der Bandbreiteneffizienz bei Digitalrichtfunksystemen mit vielstufiger Quadraturamplitudenmodulation (16 QAM, 64 QAM, ...) bietet es sich an, in einem Kanal gleichzeitig beide Polarisationsrichtungen zu benutzen. Die bislang übliche Nutzung beider Polarisationsrichtungen (vertikal und horizontal) beschränkt sich darauf, benachbarte Kanäle orthogonal polarisiert auszusenden, um durch die Polarisationsentkopplung die Nachbarkanalstörungen soweit zu reduzieren, daß zumindest eine teilweise Überlappung von Nachbarspektren möglich ist. Durch die Nutzung beider orthogonaler Polarisationsrichtungen und Gleichkanalbetrieb erhöht sich die Bandbreiteneffizienz etwa um den Faktor 2. Jedoch wird die Störanfälligkeit durch Depolarisationseffekte wesentlich größer. Depolarisation tritt u.a. bei Regen, Schnee und Mehrwegeausbreitung auf. Bei Mehrwegeausbreitung tritt im Zusammenwirken mit den Antennencharakteristiken für beide Polarisationsrichtungen vor allem bei tiefem dispersiven Fading frequenzselektive Depolarisation auf. Die Haupteffekte für die Depolarisation sind von Ausbreitungsbedingungen abhängig, die natürlich zeitvariant sind.

Zur Kompensation solcher Depolarisationseffekte sind sog. Canceller aus kreuzweise angeordneten adaptiven Phasendrehern mit einer AGC zwischen den beiden Empfangskanälen vorgesehen. Dadurch wird die durch Depolarisation hervorgerufene Verkopplung beider Kanäle reduziert. Diese Anordnung kann im RF-Bereich, ZF-Bereich oder Basisband realisiert werden. Die Wirkung bei frequenzselektiver Depolarisation ist allerdings nur begrenzt. Eine Anordnung dieser Art ist durch den Aufsatz "A decision-directed network for dual-polarization crosstalk cancellation" von William J. Weber, erschienen in ICC79, 40.4.1 bis 40.4.7, bekannt.

Ein Kompensator der eingangs beschriebenen Art ist aus IEEE International Conference on Communications, Proceedings, Band 3, Mai 1984, Seiten 1442 - 1446 bekannt. Aus IEEE International Conference on Communications, Proceedings, Band 3, Juni 1981, Seiten 46.3.1 - 46.3.5 ist ein ähnlich aufgebauter Kompensator bekannt.

Für eine bessere Kompensation der frequenzselektiven Depolarisation werden Transversalfilter als Canceller entweder in der ZF-Ebene oder im Basisband verwendet. Dabei handelt es sich um sog. Baudspaced-Transversalfilter, d.h. die Laufzeit zwischen zwei aufeinanderfolgenden Abgriffen beträgt eine Symbolperiode. Solche Canceller sind jedoch vor allem bei nicht synchronen Takten der Datenströme beider Polarisationsrichtungen wenig geeignet.

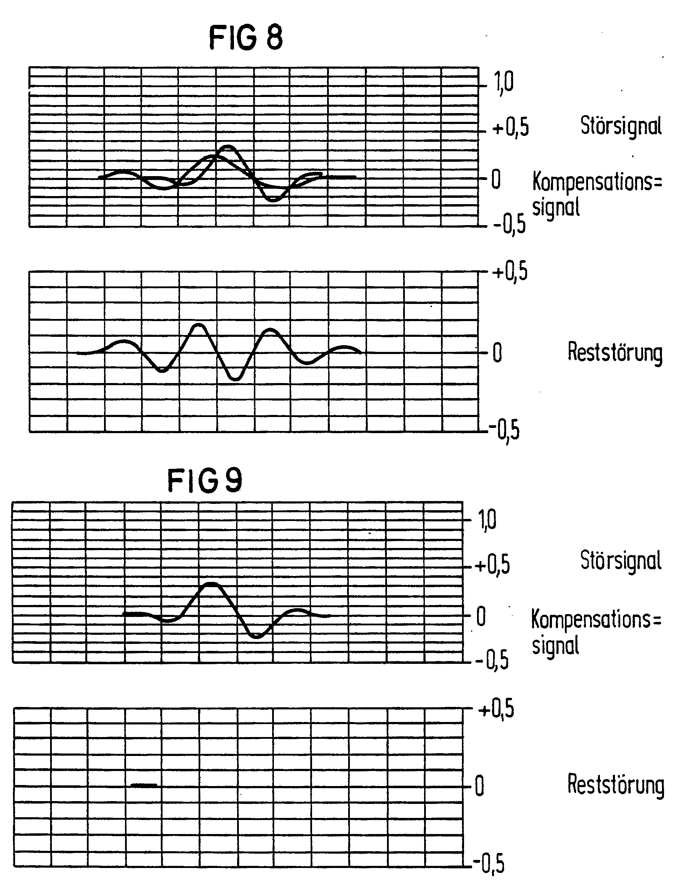

Die Einstellung der Transversalfilter erfolgt im wesentlichen durch zwei Algorithmen, nämlich den Zero-Forcing-Algorithmus und den Minimum-Mean-Square-Error-Algorithmus (MMSE). Beide Algorithmen arbeiten mit Abtastwerten der mehrstufigen Basisbandsignale. Damit ist auch ersichtlich, daß die Einstellung der Filter abhängig von der Taktphase ist. Für die Einstellung des Cancelvierpols muß jeweils der Takt des störenden Signals verwendet werden, um eine stabile Einstellung der Koeffizienten zu erreichen. Der Zero-Forcing-Algorithmus bewirkt eine genaue Übereinstimmung des Kompensationssignals mit dem Störsignal an entsprechend der Filterlänge (Koeffizientenanzahl) vielen Abtastzeitpunkten. Der MMSE-Algorithmus führt zu einem minimalen mittleren quadratischen Fehler zwischen Kompensations- und Störsignal zu allen Abtastzeitpunkten. Bei asynchronen Takten stimmt nun aber der Abtastzeitpunkt des Störsignals im allgemeinen nicht mit dem Abtastzeitpunkt des Nutzsignals überein. Bei einem Baudspaced-Transversalfilter erfüllen also die Abtastwerte im Symboltaktabstand bei realisierbarer Nyquist-Pulsformung nicht das Abtasttheorem. Damit ist die Übereinstimmung des Kompensations- mit dem Störsignal außerhalb der für die Gewinnung der Stellspannungen benutzten Abtastzeitpunkte nicht sehr gut (vgl. hierzu Figur 8, in der für ein einfaches Basisbandmodell mit selektiver Depolarisationsstörung in einem ersten Diagramm das Störsignal und das Kompensationssignal und in einem zweiten Diagramm die übriggebliebene Reststörung für einen Canceller, bestehend aus einem 7Tap-Baudspaced-Transversalfilter, dargestellt ist). Der Canceller ist hierbei nach dem Zero-Forcing-Algorithmus eingestellt, was ersichtlich ist an den Nullstellen der Reststörung entsprechend der Filterlänge. Zwischen den Abtastzeitpunkten ist die Reststörung relativ groß.

Der Erfindung liegt die Aufgabe zugrunde, einen adaptiven Depolarisations-Interferenz-Kompensator zu schaffen, mit dem auch bei asynchronem Gleichkanalbetrieb, d.h. also auch zwichen den Abtastzeitpunkten der unterschiedlich polarisierten Signale eine gute Kompensation von Depolarisationseffekten erreicht wird.

Diese Aufgabe wird gemäß der Erfindung in der Weise gelöst, daß bei einem Kompensator der eingangs beschriebenen Art den komplexen Transversalfiltern jeweils ein Quadraturdemodulator vorgeschaltet ist, dem der ZF-Träger der jeweils anderen Polarisation zugeführt wird, daß die Laufzeit zwischen den Abgriffen des Transversalfilters maximal dem halben Kehrwert der Frequenz der höchsten Spektralkomponente des Basisbandsignals $f_g$ entspricht (Erfüllung des Abtasttheorems) mit einem vorzugsweise solchen rationalen Verhältnis m/n, das eine kleinere oder gleiche Laufzeit als $\tau_0$ = $1/f_g$ liefert (m/n = Verhältnis der Symbolperiode des Störsignals zur Laufzeit zwischen den Abgriffen des Transversalfilters; m,n ganze Zahlen), daß zur Gewinnung der Koeffizienten für die Einstellung der Transversalfilter der Canceller (20 bis 25) ein Fehlersignal aus der Abtastung des gestörten Empfangssignals mit dem Takt des jeweiligen Störsignals und ein die störende Sendefolge repräsentierendes Signal (Hauptsignal), das aus dem Empfangssignal der anderen Polarisation abgeleitet wird, Korrelatoren zugeführt werden, und daß ferner zur Ableitung des Hauptsignals eine komplexe Multiplikation der Komponenten des Empfangssignals der anderen Polarisation mit dem Differenzdrehzeiger der Trägerfrequenz der nicht synchronen Träger der beiden Polarisationen erfolgt.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen

Figur 1    einen adaptiven Kompensator ohne Korrelationsteil im Blockschaltbild,

Figur 2    ein komplexes T/2-Transversalfilter im Blockschaltbild,

Figur 3    einen Korrelator für ein 5Tap-T/2-Transversalfilter in einer Teildarstellung im Blockschaltbild,

Figur 4    in einer grafischen Darstellung den Verlauf von Hauptsignal und Fehlersignal mit den zugehörigen Taktphasen,

Figur 5    eine grafische Darstellung zur Erläuterung der Gewinnung des Fehlersignals,

Figur 6    eine Einrichtung zur Ableitung von Hauptsignal und Fehlersignal mit angeschlossenen Korrelatoren,

Figur 7    eine weitere Ausführungsform eines Korrelators für ein 5Tap-T/2-Transversalfilter und

Figur 8 und 9    in Diagrammen das Störsignal, Kompensationssignal und die Reststörung bei Verwendung eines baudspaced Transversalfilters bzw. T/2-Transversalfilters (Zero Forcing-Algorithmus).

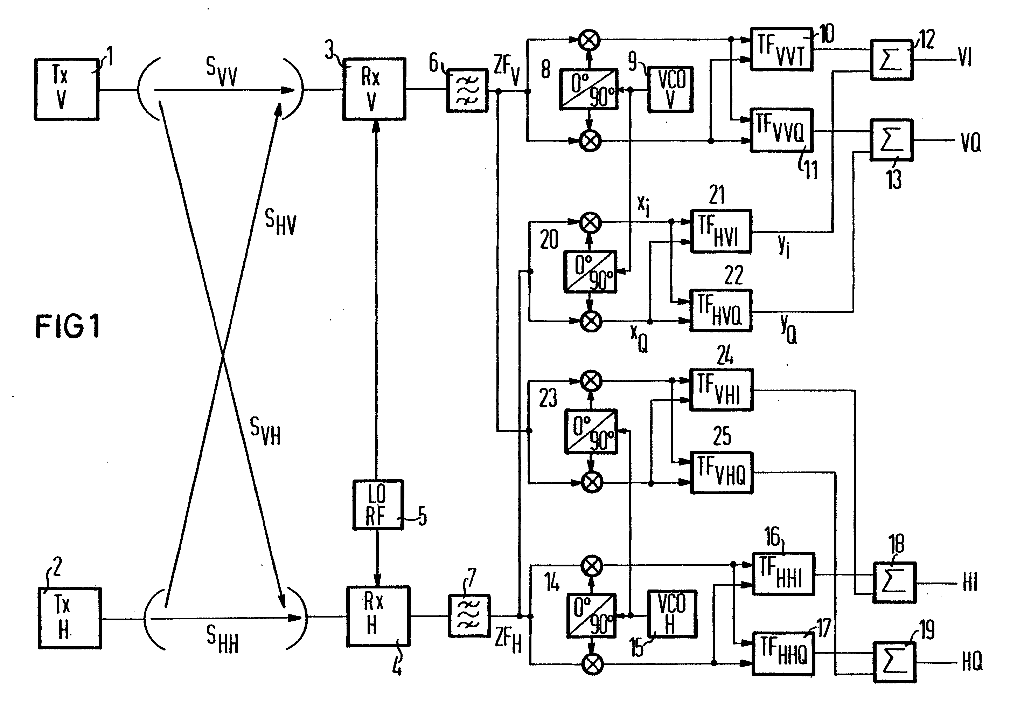

Figur 1 zeigt ein Richtfunksystem mit adaptivem Kompensator in vereinfachter Darstellung. Dabei sind auf der Sendeseite, auf der keine Synchronisation der Träger angenommen ist, Sender 1, 2 (Transceiver Tx) für die vertikale Polarisation und die horizontale Polarisation angeordnet. Die zugehörigen Empfänger (Receiver Rx) auf der Empfangsseite sind mit 3 und 4 bezeichnet. Die RF-Lokaloszillatoren der Empfänger 3, 4 müssen synchronisiert sein. Dies kann, wie im dargestellten Ausführungsbeispiel gezeigt, auch dadurch realisiert sein, daß für beide Empfänger 3,4 ein gemeinsamer Lokaloszillator 5 vorgesehen ist. Aufgrund von Depolarisationseffekten gelangen im Funkfeld Störanteile der einen Polarisation in das Empfangssignal der anderen Polarisation. Dies ist in der Figur durch die sich kreuzenden Pfeile mit der Bezeichnung $S_{HV}$ und $S_{VH}$ wiedergegeben, was bedeutet, daß Signalteile der horizontalen Polarisation in den Empfangsweg der vertikalen Polarisation gelangen und umgekehrt.

Nach den Empfängern 3,4 folgen Empfangsfilter 6,7 und Quadraturdemodulatoren 8,14, die jeweils mit einem Lokaloszillator VCO 9,15 verbunden sind. Den Demodulatoren 8,14 schließt sich im Empfangsweg der einzelnen Signale (I- und Q-Kanal) jeweils ein zur Entzerrung vorgesehenes komplexes Basisband-Transversalfilter 10,11 bzw. 16,17 an, die ausgangsseitig an ein Summierglied 12,13 bzw. 18,19 angeschlossen sind. Die Basisband-Transversalfilter sind dabei jedoch nicht zwingend erforderlich.

In der Bildmitte zwischen den beiden Empfangszweigen mit den Quadraturdemodulatoren 8,14 und Basisband-Transversalfiltern 10,11 und 16,17 ist der eigentliche Canceller dargestellt, der aus zwei Quadraturdemodulatoren 20,23 für die beiden Polarisationsrichtungen besteht, denen eingangsseitig jeweils ein Empfangssignal einer Polarisation und der ZF-Träger der jeweils anderen Polarisation zugeführt wird, sowie aus jeweils einem komplexen Transversalfilter (I- und Q-Kanal) 21, 22 und 24,25 in den Signalwegen nach den beiden Quadraturdemodulatoren 20,23, die ausgangsseitig in den Empfangszweig der jeweils anderen Polarisation eingekoppelt werden. Hierfür ist der Ausgang der betreffenden Transversalfilter 21,22 und 24,25 mit dem endsprechenden Summierglied 12,13 bzw. 18, 19 in den betreffenden Empfangszweigen verbunden. Die Summierglieder 12,13 bzw. 18,19 können auch mit einem vorgeschalteten Laufzeitausgleich (gleicht Signallaufzeit durch das Transversalfilter des Cancellers aus) unmittelbar nach den Quadraturdemodulatoren 8,14 angeordnet sein. Die Laufzeit zwischen den Abgriffen der Transversalfilter 21,22 und 24,25 entspricht maximal dem halben Kehrwert der Frequenz der höchsten Spektralkomponente des Basisbandsignals (Erfüllung des Abtasttheorems). Hierbei ist vorteilhafterweise ein rationales Verhältnis m/n gewählt, das eine kleinere oder gleiche Laufzeit liefert. m und n sind hierbei ganze Zahlen. In den Ausführungsbeispielen wurde der Wert m/n = 2 gewählt. Nähere Angaben über die Einstellung der für die Kompensation vorgesehenen Transversalfilter 21,22 und 24,25 werden in den nachfolgenden weiteren Figurenbeschreibungen gemacht.

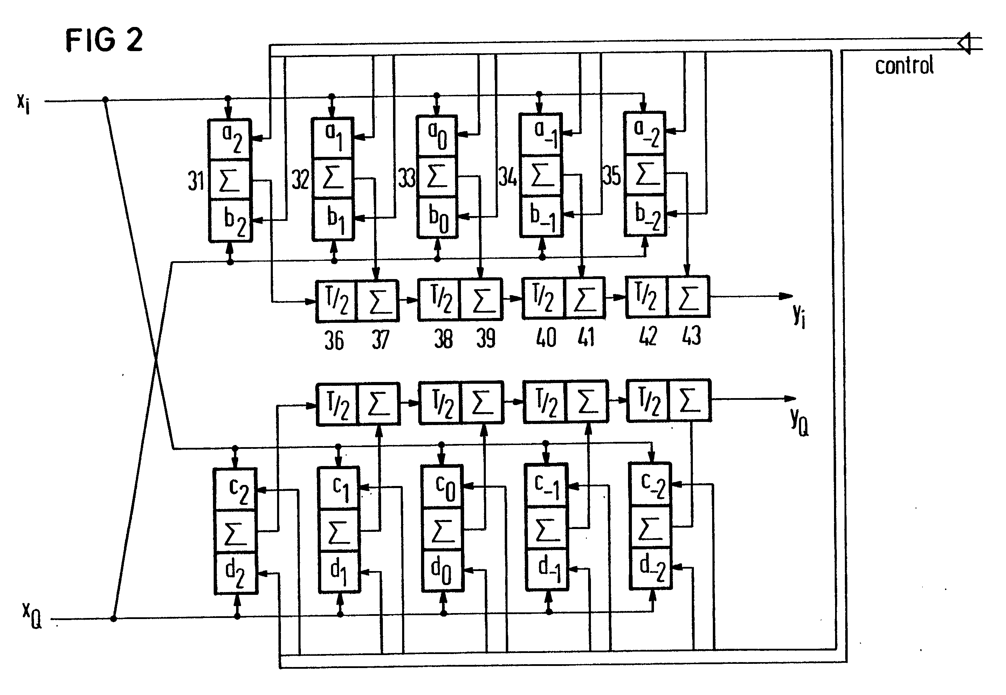

Figur 2 zeigt die Struktur eines komplexen T/2-Transversalfilters, das der Einfachheit halber als symmetrisches 5Tap-Transversalfilter in Parallel-In-Serial-Out-Struktur gezeichnet ist. Dieses Transversalfilter mit den Eingängen $x_I$ und $x_Q$ und den Ausgängen $y_I$ und $y_Q$ ist eine Detaildarstellung der Transversalfilter 21,22 in Figur 1, deren Anschlußklemmen mit den entsprechenden Bezeichnungen versehen sind. Eine solche, für ein QAM-System vorgesehene komplexe Anordnung mit einem I- und einem Q-Kanal enthält in beiden Kanälen gleichartig ausgebildete Entzerrer. Da hierbei eine Kompensation von Übersprechen von einem auf den anderen Kanal vorzunehmen ist, sind in jedem Kanal jeweils zwei Koeffizienten a,b bzw. c,d gleicher Ordnung vorgesehen, die über ein Summierglied miteinander verbunden sind. Der Teil der Schaltung, der die Erzeugung der Einstellgrößen (Koeffizienten) für die Einstellglieder betrifft, wird nachstehend näher erläutert. Es ist lediglich durch Pfeile rechts in der Figur 2 angedeutet, daß den Einstellgliedern von einem Korrelator kommende Stellspannungen zugeführt werden. Die Entzerrer im I- und Q-Kanal sind gleichartig ausgebildet, so daß es zum Verständnis der Schaltung ausreicht, den Aufbau eines Entzerrers zu beschreiben. So sind im I-Kanal die Einstellglieder $a_2...a_{-2}$ und $b_2...b_{-2}$ mit ihrem jeweils zugehörigen Summierglied 31...35 eingangsseitig parallel zueinander angeordnet, während die Ausgänge an eine Serienschaltung von Verzögerungs- und Summiergliedern (Verzögerungszeit T/2) 36-43 geführt sind.

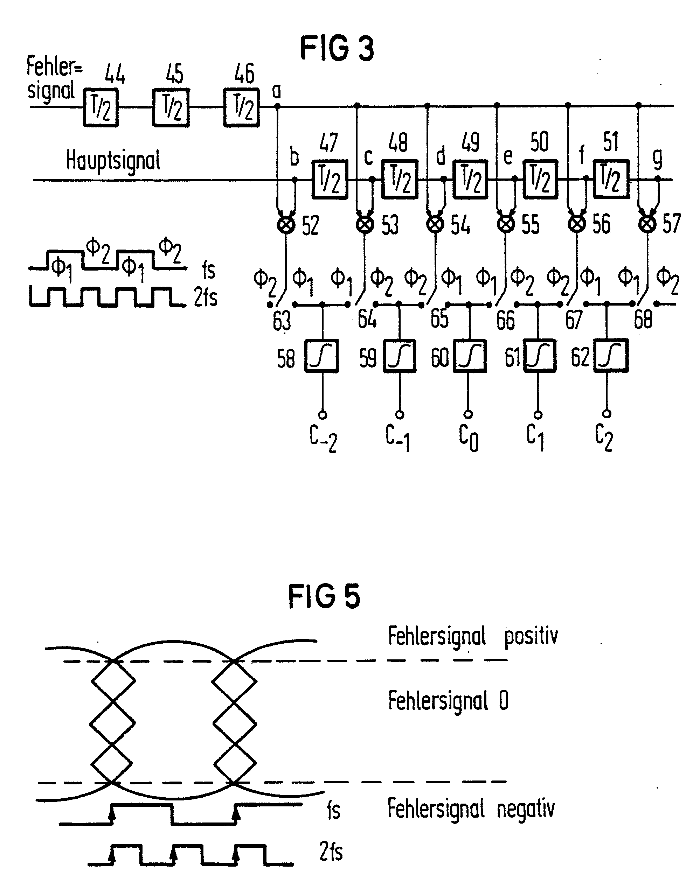

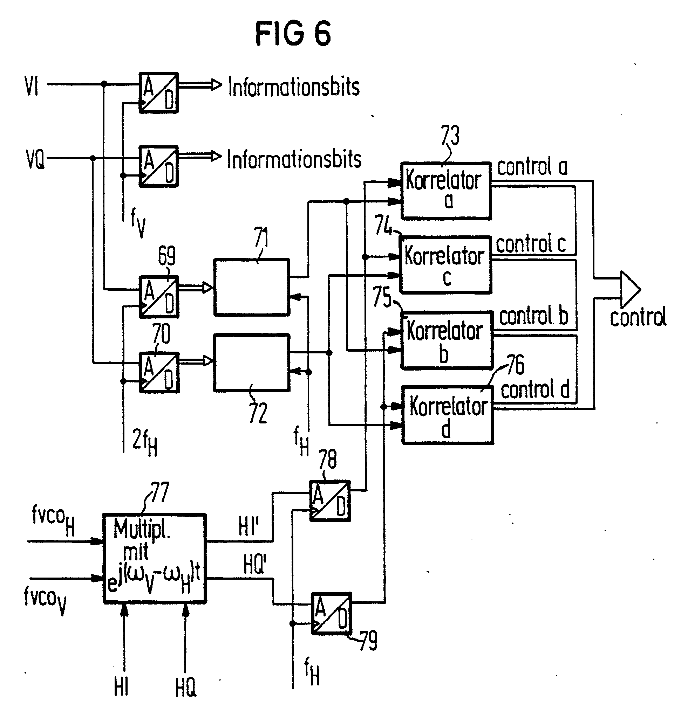

Die adaptive Einstellung dieser Transversalfilter erfolgt mittels eines speziell ausgebildeten Korrelators, von dem Figur 3 eine Teildarstellung, d.h. 1/4 der Gesamtanordnung für ein 5Tap-Transversalfilter zeigt. Für die Korrelation sind ein Fehlersignal und ein Hauptsignal erforderlich, wobei das Fehlersignal aus der Abtastung des gestörten Empfangssignals mit der dem Kehrwert der Laufzeit eines Verzögerungsgliedes im Transversalfilter des Cancellers entsprechenden Frequenz gewonnen wird und das Hauptsignal ein die störende Sendefolge repräsentierendes Signal ist, das aus dem Empfangssignal der anderen Polarisation abgeleitet wird (eine Schaltung zur Ableitung dieser Signale zeigt Fig. 6). Das Fehlersignal und Gas Hauptsignal werden über Laufzeitglieder 44...51, die in ihrer Laufzeit denen im Transversalfilter entsprechen (im Ausführungsbeispiel also T/2), zeitverschoben einer Kette von aus Multiplizierern 52...57 und Integratoren 58...62 bestehenden Korrelatoren zugeführt, wobei im Signalweg des Multiplikationsergebnisses (wie in Fig. 3 dargestellt) eine Umschalteinrichtung 63...68 vorgesehen ist. Bei dem allgemeinen Verhältnis m/n der Abtastfrequenz bei der Gewinnung des Fehlersignals zum Takt des Störsignals werden durch die Umschaltung die während der Zeit n x Symbolperiode des Störsignals (= m x Periode des Abtasttaktes des Fehlersignals) unterschiedliche Multiplikationsergebnisse auf die entsprechenden Integratoren geschaltet. Deren Ausgangssignale liefern die Koeffizienteneinstellung. Bei der im Ausführungsbeispiel gewählten Laufzeit von T/2 werden die Umschalter im Rhythmus der halben Symbolperiode, also mit der doppelten Taktfrequenz $2f_S$ umgeschaltet, so daß sie während jeweils gleichlanger Taktphasen $\phi_1$ und $\phi_2$ an benachbarten Integratoren anliegen.

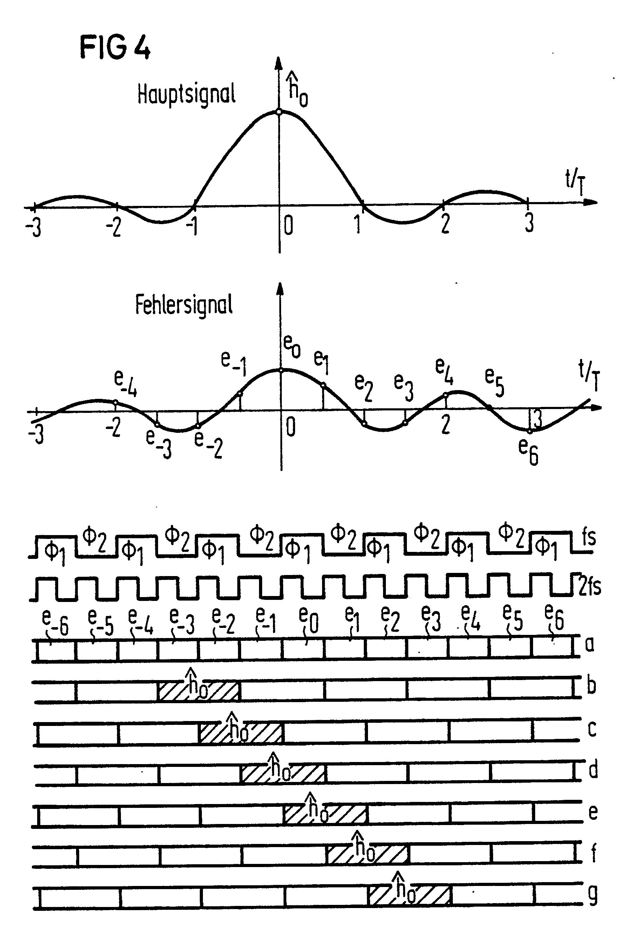

Die Wirkungsweise der vorstehend beschriebenen Schaltung ist in einer grafischen Darstellung in Figur 4 gezeigt, wobei der Einfachheit halber das Prinzip des Korrelators nur für den einkanaligen Fall wiedergegeben ist. Ein erstes Diagramm in Figur 4 zeigt den Verlauf des Hauptsignals, das zum Zeitpunkt t = 0 den Maximalwert $\hat{h}_0$ aufweist und bei symmetrischem Verlauf Nulldurchgänge bei -3T, -2T; -1T, +1T und +2T, +3T aufweist. Darunter ist in gleicher grafischer Darstellung ein Fehlersignal aufgezeichnet mit den Abtastwerten $e_{-6}$; $e_{-5}$, $e_{-4}...e_0...e_4, e_5, e_6$ zu den Zeitpunkten -3T bis +3T. Die Sendefolge des Hauptsignals wird mit der Geschwindigkeit des Symboltaktes $f_S$ an den Korrelator geliefert, die Fehlerabtastwerte jedoch mit dem doppelten Symboltakt $2f_S$. Dies ist in den darunterliegenden Diagrammen grafisch dargestellt. Unterhalb dieser sind in den Diagrammen a bis g die Abtastwerte an verschiedenen Abgriffen des Korrelators eingezeichnet, wobei die einzelnen Buchstaben a bis g der Diagramme den entsprechend bezeichneten Abgriffen beim Korrelator gemäß Figur 3 zugeordnet sind. Aus diesen Zeitdiagrammen des Korrelators wird deutlich, daß während einer Symbolperiode zwei Fehlerabtastwerte an denselben Multiplizierer gelangen, die für zwei benachbarte Koeffizienten des T/2-Transversalfilters die Filtereinstellung bewirken. Das heißt also, daß die Ergebnisse des Multiplizierers mit dem doppelten Symboltakt an die entsprechenden Eingänge der Integratoren geschaltet werden müssen.

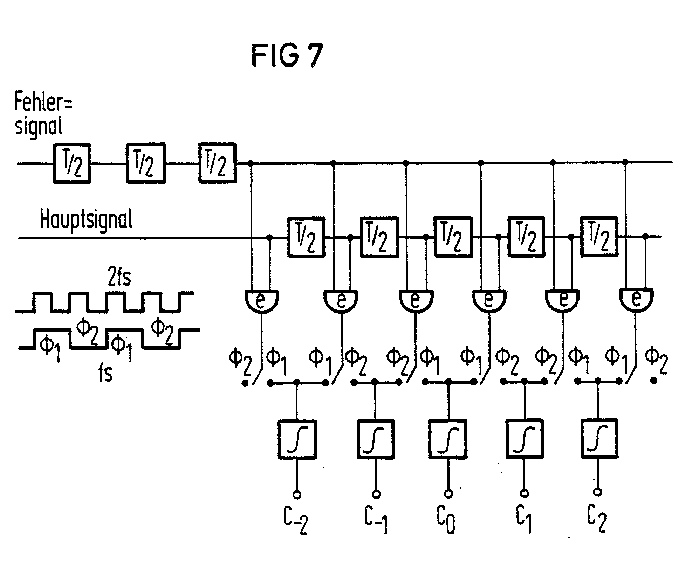

Bei den in der Praxis üblichen hohen Datenraten wird ein möglichst einfacher Korrelator verwendet. Es wird nur das Vorzeichen des Hauptsignals (1 Bit) und das Vorzeichen des Fehlersignals (1 Bit) verwendet, so daß sich der Multiplizierer zu einem EX-OR-GATE (Exclusiv-ODER-Gatter, Mod 2 Multiplikation) vereinfacht. Ein solcher Korrelator mit einem EX-OR-GATE als Multiplizierer ist in Figur 7 dargestellt, wobei auch hier der Einfachheit halber lediglich ein Viertel der Gesamtanordnung wiedergegeben ist wie bei der entsprechenden Korrelatoranordnung in Figur 3. In ihrem übrigen Aufbau stimmen beide Korrelatoren überein, so daß eine nähere Beschreibung der Anordnung nach Figur 7 nicht erforderlich ist.

Die Bestimmung des Fehlersignals kann dabei in der Weise erfolgen, wie dies in Figur 5 am Beispiel eines 16 QAM-Signals wiedergegeben ist. Es werden zwei Schwellen zur Ermittlung des Fehlersignals gebildet, die auf den beiden höchststufigen Signalwerten, d.h. der größten bzw. äußersten positiven und negativen Amplitudenstufe liegen. Dabei gilt folgendes: ist das abgetastete Signal größer als die obere Schwelle, dann ist der Fehlerbeitrag positiv; ist der Abtastwert kleiner als die negativste Stufe, dann ist der Fehlerbeitrag negativ. Liegt der Abtastwert jedoch dazwischen, dann ist der Fehlerbeitrag Null, was zu keiner Korrelationsinformation führt. Diese Auswertung der Abtastwerte hat den Vorteil gegenüber einer einzigen Schwelle in der Mitte, daß bei synchronen Datenströmen die eine Abtastung des Fehlerbits, die mit ihrem Augenmittelpunkt des gestörten Nutzsignals zusammenfällt, bei kleinen Störungen auch eine Korrelationsinformation liefert.

Für die Korrelation ist jetzt noch das Hauptsignal wichtig, das die Depolarisationsstörungen verursacht. Dieses Signal liegt bereits vor, allerdings ist es bezüglich der Fehlerabtastwerte mit einem anderen Träger demoduliert worden. Für die Korrelation wird daher das die Depolarisationsstörung verursachende Signal mit dem komplexen Differenzdrehzeiger der Trägerfrequenzen der beiden Polarisationen multipliziert. Danach kann das für die Korrelation benötigte Hauptsignal durch Abtastung gewonnen werden. Eine Schaltung, die die Ableitung des Fehlersignals und die genannte Multiplikation des Hauptsignals durchführt, also die Eingangssignale zur Korrelatorsteuerung erzeugt, ist für eine Seite des Cancellers in Figur 6 dargestellt. Mit dieser Schaltung werden Störungen des H-Kanals im V-Kanal beseitigt. Dafür werden aus dem I- und Q-Kanal des vertikal polarisierten Signals Signalteile ausgekoppelt und über jeweils einen A/D-Wandler 69,70 auf Fehlersignal-Auswertungen 71,72 gegeben, deren Ausgänge mit jeweils zwei Korrelatoren 73, 75 bzw. 74, 76 der in Figur 4 und 7 beschriebenen Art verbunden sind. Ferner werden Signalteile des I- und Q-Kanals des horizontal polarisierten Signals auf einen Multiplizierer 77 gegeben und in diesem mit dem Differenzdrehzeiger der Trägerfrequenzen $f_{VCOH}$ und $f_{VCOV}$ der nicht synchronen Träger der beiden Polarisation multipliziert. Die Ausgangssignale HI' und HQ' des Multiplizierers 77 gelangen über A/D-Wandler 78,79 an den jeweils zweiten Eingang der Korrelatoren 73,74 bzw. 75, 76. Diese Korrelatoren liefern die Einstellgrößen für die Stellglieder a,b,c und d im Transversalfilter gemäß Figur 2. Dies ist durch die Bezeichnung "control" an den entsprechenden Pfeilen in den Figuren 2 und 6 kenntlich gemacht. Die Multiplikation kann natürlich auch nach den A/D-Wandlern erfolgen.

Figur 8 zeigt, wie vorstehend bereits ausgeführt, Diagramme des Störsignals, des Kompensationssignals und der übriggebliebenen Reststörung für ein einfaches Basisbandmodell mit selektiver Depolarisationsstörung für einen Canceller, bestehend aus einem 7Tap-Baudspaced-Transversalfilter. In Gegenüberstellung hierzu sind darunterliegend in Figur 9 entsprechende Diagramme dargestellt für die erfindungsgemäße Anordnung mit einem Canceller, dessen Transversalfilter eine Laufzeit zwischen den Abgriffen von beispielsweise einer halben Symbolperiode (T/2) aufweisen. Damit läßt sich das Abtasttheorem erfüllen und, wie aus Figur 9 ersichtlich, ist die Übereinstimmung von Störsignal und Kompensationssignal zu allen Zeitpunkten wesentlich besser als bei den entsprechenden Diagrammen nach Figur 8. Die übriggebliebene Reststörung ist mit diesem Canceller, der ebenfalls nach dem Zero-Forcing-Algorithmus eingestellt ist, deutlich besser.

## Ansprüche

1. Adaptiver Depolarisations-Interferenz-Kompensator für digitale Richtfunksysteme mit vielstufiger Quadraturamplitudenmodulation (QAM) bei hinsichtlich Takt und/oder Trägerfrequenz nicht notwendigerweise synchronem Gleichkanalbetrieb der orthogonal polarisierten Signale unter Verwendung von Transversalfiltern mit Einrichtungen zur Auskopplung von Signalen aus dem Empfangszweig der einen Polarisation und Einkopplung in den Empfangsweg der jeweils anderen Polarisation, mit im Empfangs-

9    EP 0 244 779 B1    10

zweig der beiden Empfänger mit demselben oder mit aufeinander synchronisierten getrennten Lokaloszillatoren für die unterschiedlich polarisierten Signale angeordnetem Quadraturdemodulator für seine beiden Signalanteile (I- und Q-Kanal) und ferner einem Canceller, der aus zwei komplexen Transversalfiltern für die beiden Polarisationsrichtungen besteht, denen eingangsseitig jeweils ein ZF-Empfangssignal einer Polarisation zugeführt wird, und die ausgangsseitig in den Empfangszweig der jeweils anderen Polarisation eingekoppelt werden, **dadurch gekennzeichnet,** daß den komplexen Transversalfiltern jeweils ein Quadraturdemodulator vorgeschaltet ist, dem der ZF-Träger der jeweils anderen Polarisation zugeführt wird, daß die Laufzeit zwischen den Abgriffen des Transversalfilters maximal dem halben Kehrwert der Frequenz der höchsten Spektralkomponente des Basisbandsignals $f_g$ entspricht (Erfüllung des Abtasttheorems) mit einem vorgzugsweise solchen rationalen Verhältnis m/n, das eine kleinere oder gleiche Laufzeit als $\tau_0 = 1/f_g$ liefert (m/n = Verhältnis der Symbolperiode des Störsignals zur Laufzeit zwischen den Abgriffen des Transversalfilters; m,n ganze Zahlen), daß zur Gewinnung der Koeffizienten für die Einstellung der Transversalfilter der Canceller (20 bis 25) ein Fehlersignal aus der Abtastung des gestörten Empfangssignals mit dem Takt des jeweiligen Störsignals und ein die störende Sendefolge repräsentierendes Signal (Hauptsignal), das aus dem Empfangssignal der anderen Polarisation abgeleitet wird, Korrelatoren zugeführt werden, und daß ferner zur Ableitung des Hauptsignals eine komplexe Multiplikation der Komponenten des Empfangssignals der anderen Polarisation mit dem Differenzdrehzeiger der Trägerfrequenz der nicht synchronen Träger der beiden Polarisationen erfolgt.

2. Kompensator nach Anspruch 1, **dadurch gekennzeichnet,** daß das Hauptsignal und das Fehlersignal über Laufzeitglieder (44...51), die in ihrer Laufzeit denen im Transversalfilter entsprechen, zeitverschoben einer Kette von aus Multiplizierern (52...57) und Integratoren (58...62) bestehenden Korrelatoren zugeführt werden, wobei im Signalweg des Multiplikationsergebnisses eine Umschalteinrichtung (63...68) vorgesehen ist, die die während der Zeit n • Symbolperiode des Störsignals (= m • Periode des Abtasttaktes des Fehlersignals) unterschiedlichen Multiplikationsergebnisse auf die entsprechenden Integratoren schaltet, deren Ausgangssignale die Koeffizienteneinstellung liefern.

3. Kompensator nach Anspruch 1 oder 2, **dadurch gekennzeichnet, daß** die komplexe Multiplikation zur Ableitung des Hauptsignals vor · im Signalweg angeordneten A/D-Wandlern (72, 73) oder danach entsprechend analog bzw. digital ausgeführt wird.

4. Kompensator nach einem der Ansprüche 1 bis 3, **dadurch gekennzeichnet, daß** für Hauptund Fehlersignal amplitudenquantisierte Abtastwerte verwendet werden, vorzugsweise eine 1 bit-Quantisierung, deren in den Korrelatoren nötige Multiplizierer durch ein EXOR (Exclusiv-ODER-Gatter, mod 2 Multiplikation) realisiert sind.

5. Kompensator nach Anspruch 4, **dadurch gekennzeichnet, daß** für die Gewinnung des Fehlersignals zwei Schwellen, die den größten bzw. äußersten Amplitudenstufen (positive und negative) des Basisbandsignals entsprechen, benutzt werden, wobei en Fehlersignalabtastwert oberhalb der positiven Schwelle einen positiven, einer unterhalb der negativen Schwelle einen negativen und einer innerhalb beider Schwellen keinen Beitrag zur Korrelation liefert.

**Claims**

1.. Adaptive depolarisation interference compensator for digital radio relay systems using multilevel quadrature amplitude modulation (QAM) with same-channel operation of the orthogonally polarised signals, which are not necessarily synchronous with the clock frequency and/or carrier frequency, making use of transversal filters with devices for coupling out signals from the receiving arm of one polarisation and coupling in signals into the receiving path of the other polarisation in each case, comprising a quadrature demodulator, arranged in the receiving arm of the two receivers, which use the same local oscillator or separate local oscillators that are synchronised with respect to one another, for the differently polarised signals, for its two signal components (I and Q channel), and furthermore a canceller, which consists of two complex transversal filters for the two polarisation directions, to which an IF received signal of one polarisation is supplied at the input in each case, and which are coupled at the output into the receiving arm, of the respective other polarisation, characterised in that a quadrature demodulator to which the IF

6

carrier of the respective other polarisation is supplied is connected upstream of the complex transversal filters in each case, in that the delay time between the taps of the transversal filter corresponds at most to half the reciprocal value of the frequency of the highest spectral component of the baseband signal $f_g$ (fulfilment of the sampling theorem) preferably with such a rational ratio m/n which supplies a delay time shorter than or equal to $\tau_0 = 1/f_g$(m/n = ratio of the symbol period of the interference signal to the delay time between the tapping of the transversal filter; m,n integers), in that to obtain the coefficients for setting the transversal filters of the cancellers (20 to 25) an error signal from the sampling of the disturbed received signal with the timing of the respective interference signal and a signal (main signal), which represents the interfering transmitted sequence and is derived from the received signal of the other polarisation, are supplied to correlators, and in that further to derive the main signal a complex multiplication is carried out on the components of the received signal of the other polarisation by the complex phasor of the carrier frequency of the non-synchronous carriers of the two polarisations.

2. Compensator according to Claim 1, characterised in that the main signal and the error signal are supplied via delay elements (44...51), which correspond in their delay time to those in the transversal filter, in a time-shifted fashion to a chain of correlators consisting of multipliers (52...57) and integrators (58...62), there being provided in the signal path of the multiplication result a switch-over device (63...68), which switches the multiplication results, which differ during the time n • symbol period of the interference signal (= m • period of the sample clock of the error signal), to the corresponding integrators whose output signals supply the coefficient setting.

3. Compensator according to Claim 1 or 2, characterised in that the complex multiplication for deriving the main signal is performed preceding A/D converters (72, 73) arranged in the signal path or thereafter in an appropriately analog or digital manner.

4. Compensator according to one of Claims 1 to 3, characterised in that amplitude-quantised sample values are used for the main signal and error signal, preferably a 1-bit quantisation, whose multipliers that are required in the correlators are implemented by an EXOR (exclusive-OR gate, mod 2 multiplication).

5. Compensator according to Claim 4, characterised in that in order to obtain the error signal use is made of two thresholds which correspond to the largest or most extreme amplitude levels (positive and negative) of the baseband signal, an error signal sample value above the positive threshold making a positive contribution to the correlation, an error signal sample value below the negative threshold making a negative contribution to the correlation, and an error signal sample value within the two thresholds making no contribution to the correlation.

**Revendications**

1. Compensateur adaptatif d'interférences de dépolarisation pour des systèmes hertziens numériques comportant une modulation d'amplitude en quadrature à quatre échelons (QAM) pour une exploitation en voie commune, non nécessairement synchrone du point de vue de la cadence et/ou de la fréquence porteuse, des signaux polarisés orthogonalement moyennant l'utilisation de filtres transversaux comportant des dispositifs pour réaliser le découplage des signaux à partir de la branche de réception présentant une polarisation et une injection par couplage dans la branche de réception présentant l'autre polarisation respective, et comportant un démodulateur en quadrature installé dans la branche de réception des deux récepteurs avec le même oscillateur local ou des oscillateurs locaux séparés, synchronisés l'un sur l'autre, pour les signaux polarisés différemment, et servant à moduler ses deux composantes de signaux (canaux I et Q), et en outre un suppresseur constitué par deux filtres transversaux complexes pour les deux sens de polarisation, au côté entrée desquels sont envoyés respectivement des signaux de réception à fréquence intermédiaire possédant une polarisation et sont injectés par couplage, côté sortie, dans la branche de réception correspondant à l'autre polarisation respective, caractérisé par le fait qu'en amont des filtres transversaux complexes sont branchés des démodulateurs en quadrature respectifs, auxquels est envoyée la porteuse à fréquence intermédiaire possédant respectivement l'autre polarisation, que le temps de propagation entre les prises du filtre transversal correspond au maximum à la moitié de l'inverse de la fréquence de la composante spectrale maximale du signal $f_g$ de la bande de base (le théorème d'échantillonnage est satisfait) avec de préférence un rapport rationnel m/n, qui fournit un temps de propagation inférieur ou égal à

$\tau_0 = 1/f_g(m/n =$ rapport de la période du symbole de signal parasite au temps de propagation entre les prises du filtre transversal; m, n nombres entiers) tel que pour l'obtention des coefficients pour le réglage des filtres transversaux des suppresseurs (20 à 25), un signal d'erreur provenant de l'échantillonnage du signal de réception perturbé est envoyé, ainsi que la cadence du signal parasite respectif et un signal (signal principal), qui représente la suite d'émission parasite et est dérivé du signal de réception possédant l'autre polarisation, sont envoyés à des corrélateurs et qu'en outre l'obtention du signal principal est obtenue au moyen d'une multiplication complexe de la composante du signal de réception présentant l'autre polarisation par le vecteur tournant différentiel de la fréquence des porteuses non synchrones des deux polarisations.

2. Compensateur suivant la revendication 1, caractérisé par le fait que le signal principal et le signal d'erreur sont envoyés en étant décalés dans le temps par l'intermédiaire de circuits de retardement (44...51), qui produisent des retards correspondant à ceux apparaissant dans le filtre transversal, à une chaîne de corrélateurs constituée par des multiplicateurs (52...57) et par des intégrateurs (58...62), auquel cas il est prévu, dans la voie de transmission des signaux du résultat de multiplication, un dispositif de commutation (63...68), qui applique les résultats de la multiplication, qui sont différents pendant la période n. période du signal parasite (= m. période de la cadence d'échantillonnage du signal d'erreur) aux intégrateurs correspondants, dont les signaux de sortie réalisent le réglage des coefficients.

3. Compensateur suivant la revendication 1 ou 2, caractérisé par le fait que la multiplication complexe pour l'obtention du signal principal est réalisée de façon correspondante sous forme analogique ou numérique en amont de convertisseurs analogique/numérique (72,73) montés dans la voie de transmission de signaux, ou en aval de ces convertisseurs.

4. Compensateur suivant l'une des revendications 1 à 3, caractérisé par le fait que pour le signal principal et le signal d'erreur, on utilise des valeurs d'échantillonnage à amplitude quantifiée, de préférence une quantification à 1 bit, les multiplicateurs nécessaires pour cette quantification dans les corrélateurs étant constitués par une porte EXOR (porte OU-Exclusif, multiplication modulo 2).

5. Compensateur suivant la revendication 4, caractérisé par le fait que pour l'obtention du signal d'erreur, on utilise deux seuils qui correspondent aux échelons d'amplitude maximum ou les plus extérieurs (positif et négatif) du signal de la bande de base, une valeur d'échantillonnage du signal d'erreur apportant une contribution positive à la corrélation, tandis qu'une valeur d'échantillonnage du signal d'erreur inférieur au seuil négatif apporte une contribution négative et qu'une valeur d'échantillonnage du signal d'erreur située entre ces deux seuils n'apporte aucune contribution.

FIG 1

FIG 2

control

EP 0 244 779 B1

EP 0 244 779 B1

# FIG 3

Fehler=signal — 44 T/2 — 45 T/2 — 46 T/2 — a

Hauptsignal — b — 47 T/2 — c — 48 T/2 — d — 49 T/2 — e — 50 T/2 — f — 51 T/2 — g

52 53 54 55 56 57

$\Phi_1$ $\Phi_2$ $\Phi_1$ $\Phi_2$ fs
2fs

$\Phi_2$ $\Phi_1$ $\Phi_1$ $\Phi_2$ $\Phi_2$ $\Phi_1$ $\Phi_1$ $\Phi_2$ $\Phi_2$ $\Phi_1$ $\Phi_1$ $\Phi_2$

63 64 65 66 67 68

58 59 60 61 62

$C_{-2}$ $C_{-1}$ $C_0$ $C_1$ $C_2$

# FIG 5

Fehlersignal positiv

Fehlersignal 0

fs — Fehlersignal negativ

2fs

11

# FIG 4

Hauptsignal

Fehlersignal

# FIG 6

VI →•→ [A/D] ⇒ Informationsbits

VQ →•→ [A/D] ⇒ Informationsbits

$f_V$

69 [A/D] → 71

70 [A/D] → 72

$2f_H$

$f_H$

73 Korrelator a — control a

74 Korrelator c — control c

75 Korrelator b — control b

76 Korrelator d — control d

→ control

77 Multipl. mit $e^{j(\omega_V - \omega_H)t}$

$fvco_H$ →

$fvco_V$ →

HI' — 78 [A/D]

HQ' — 79 [A/D]

$f_H$

HI    HQ

EP 0 244 779 B1

## FIG 7

Fehler=
signal

Hauptsignal

$2fs$

$\Phi_2$  $\Phi_2$
$\Phi_1$  $\Phi_1$

$fs$

$C_{-2}$  $C_{-1}$  $C_0$  $C_1$  $C_2$

## FIG 8

Störsignal

Kompensations= signal

Reststörung

## FIG 9

Störsignal

Kompensations= signal

Reststörung